# EUROPÄISCHE PATENTANMELDUNG

(11) **EP 1 026 806 A2**
(43) Veröffentlichungstag der Anmeldung: **09.08.2000**
(21) Anmeldenummer: 00100960.4
(22) Anmeldetag: 19.01.2000
(51) Int. Cl.: H02J 7/00

(54) **Ladestation für einen Stromspeicher**

(30) Priorität: 22.01.1999 DE 19909292
(71) Anmelder: Metzger, Eberhard, 52511 Geilenkirchen (DE)
(72) Erfinder: Metzger, Eberhard, 52511 Geilenkirchen (DE)
(74) Vertreter: von Creytz, Dietrich, Dipl.-Phys.

(57) **Zusammenfassung**

Es wird eine Ladestation für mindestens einen Akkumulator (Akku) beschrieben, in der der Akku nach dem sogenannten Reflexladeverfahren zyklisch entladen und geladen wird. Unter anderem um zu erreichen, daß eine gesonderte Entladung nicht erforderlich ist und Änderungen des Ladegeräts zum Anpassen an Größe oder Zahl der zu ladenden Akkus nicht erforderlich sind, wird der Akku mit seiner Masseseite über einen seinen Akku-Innenwiderstand übersteigenden Ladewiderstand geerdet. Außerdem wird ein Entladestromkreis vorgesehen, welcher die Akku-Klemmen über einen Entlade-Widerstand, der um den vorgegebenen Faktor kleiner als der Ladewiderstand ist, verbindet und den Ladewiderstand nicht enthält.

## Beschreibung

Die Erfindung betrifft eine Ladestation für mindestens einen Stromspeicher bzw. Akkumulator (Akku), insbesondere nach Art eines Nickel-Cadmium (NiCd) oder Nickel-Metall-Hydrid (NiMH)-Akku, in der der Akkumulator nach dem sogenannten Reflexladeverfahren während des Ladevorgangs zyklisch entladen wird, wobei also die Entladezeit kurz gegen die Ladezeit und die Entladestromstärke dem Betrage nach um einen vorgegebenen Reflexfaktor größer als die Ladestromstärke ist. Die Erfindung betrifft ferner ein verbessertes Reflexladeverfahren.

Unter anderem wegen ihrer Hochstromfähigkeit und ihrer schnellen Aufladbarkeit, sind NiCd und dergleichen (dem sogenannten Memory-Effekt unterliegende) Akkumulatoren - kurz Akkus - bevorzugt im Einsatz. Diese Akkus weisen begründet durch ihre chemische Zusammensetzung - eine unerfreuliche Eigenschaft, nämlich den vorgenannten Memory-Effekt, auf. Beispielsweise beim Laden von NiCd-Akkus finden interne Elektrolyseprozesse statt. Daher muß bei der Entladung darauf geachtet werden, daß die Entladeschlußspannung erreicht wird, da sich der Akku eine unvollständige Entleerung 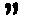 merkt". Die Folge ist eine von Ladung zu Ladung immer geringer werdende Kapazitätsaufnahme.

Um dem Memory-Effekt vorzubeugen, ist das sogenannte Reflexladeverfahren entwickelt worden. Ein wesentliches Element dieses Verfahrens besteht darin, daß während des Ladevorgangs (mit hohem Strom) periodisch für eine kurze Zeit (mit einem noch höherem Strom) entladen wird. Beispielsweise wird während einer Periodendauer von 1 Sekunde für 983 ms mit einem Ladestrom, z.B. 1 Ampere, geladen und nach einer Pause von 2 ms wird der Akku 5 ms lang entladen und zwar bevorzugt mit einem mindestens etwa 2,5-fach höheren Strom. Mit Anbruch der nächsten Sekunde beginnt die Ladephase von neuem.

Der Sinn dieser Verfahrensweise ist folgender: Beim Laden mit hohem Strom entstehen durch Elektrolyseprozesse kleine Sauerstoffbläschen an den Elektroden des jeweiligen Stromspeichers, z.B. NiCd-Akkus. Die Elektrodenfläche wird dadurch reduziert und die Impedanz der Akku-Zelle wird erhöht. Eine erhöhte Zellenimpedanz hat eine geringere Ladeeffektivität und zudem eine höhere Akkutemperatur zur Folge.

Durch den periodischen Entladeimpuls des Reflexladeverfahrens werden die Sauerstoffbläschen von den Elektroden abgelöst; durch den umgekehrten Stromfluß wird nämlich eine Rekombination an der anderen Elektrode gefördert. Das Verfahren arbeitet jedoch nur zuverlässig, so lange die Gasbläschen noch sehr klein sind. Aus diesem Grunde erfolgt der Entladeimpuls in jeder Sekunde der Ladezeit. Letztlich wird bei optimaler Durchführung des Reflexladeverfahrens der Memory-Effekt fast vollständig unterdrückt.

Obwohl die Vorteile des Reflexladeverfahrens bekannt sind, bereitet die Praxis wegen des Aufwandes Schwierigkeiten. Theoretisch einwandfrei nach dem Reflexladeverfahren arbeitende Geräte können nur bei bestimmter Spannung und bestimmten Strömen, also auch nur für eine bestimmte Zahl von Akkus, betrieben werden. Für Spannungs- oder Stromänderungen sind Umbauten erforderlich. Es gibt auch einfache Ladegeräte im Handel, mit denen Akkus vor erneuter Ladung zunächst bis zur Entladeschlußspannung entleert werden können, der Praktiker nimmt sich jedoch meist nicht genug Zeit, so daß die meisten NiCd-Akkus usw. nach höchstens 100 bis 150 Ladungszyklen ihre Gebrauchstüchtigkeit verlieren.

Der Erfindung liegt die Aufgabe zugrunde, eine nach dem Reflexladeverfahren arbeitende Ladestation zu schaffen, die eine 100 %ige Volladung und exakt sichere Abschaltung bei Volladung garantiert, so daß eine Überladung des Akkus ausgeschlossen ist; die Ladestation soll mit relativ geringen Ladezeiten, von z.B. ¼ Stunde, auskommen; der Memory-Effekt soll minimiert sein; eine gesonderte Entladung vor erneutem Laden soll entfallen, so daß Fehlbedienungen nicht mehr auftreten können.

Die erfindungsgemäße Lösung besteht für die eingangs genannte Ladestation darin, daß der Akkumulator (Akku) mit seiner Masseseite über einen seinen AkkuInnenwiderstand übersteigenden Ladewiderstand geerdet ist und daß ein entsprechender Entladestromkreis vorgesehen ist, welcher die Akku-Klemmen über einen Entlade-Widerstand, der um den vorgegebenen Reflexfaktor kleiner als der Ladewiderstand ist, verbindet, wobei der Ladewiderstand außerhalb des Entladestromkreises liegt.

Dadurch, daß erfindungsgemäß der Entladestromkreis die Masseseite des zu ladenden Akkus bzw. der Akkus auf der von der Erde abgewandten Akku-Seite des Ladewiderstandes kontaktiert, und dadurch, daß der Entlade-Widerstand um den vorgegebenen Reflexfaktor, z.B. 2,0 und mehr, insbesondere etwa um den Faktor 2,5, kleiner als der Ladewiderstand gemacht wird, ist der Entladestrom automatisch um denselben Reflexfaktor größer als der Ladestrom. Diese Bemessung gilt unabhängig von Zahl und Bemessung der gerade geladenen Akkus und unabhängig von der Größe der verwendeten Ströme oder Spannungen.

Gemäß weiterer Erfindung können die Lade- und Entladeströme während der entsprechenden Lade- bzw. Entlade-Zyklen abgetastet und zum Abschalten des jeweilig in Betrieb befindlichen Zyklus bzw. zum Einschalten des anderen Zyklus herangezogen werden. Das wird erreicht, wenn zum wahlweisen Einschalten des Lade- oder Entladezyklus eine mit einem vorgegebenen Sollstrom beaufschlagte Steuerung vorgesehen ist, welche Mittel zum Öffnen eines - normalerweise gesperrten - Lade- oder Entladestromkreises abhängig von der Größe des Ist-Entladestroms bzw. des Ist-Ladestroms im Verhältnis zur Größe des Sollstroms besitzt. Beispielsweise können die Ist-Ströme mit den Sollströmen in Komperatoren verglichen werden, derart, daß der Ladestromkreis eingeschaltet wird, wenn der Ist-Entladestrom größer als der Sollstrom ist; entsprechendes gilt umgekehrt für das Einschalten des Entladestromkreises. Wenn dann die Ist-Ströme die Größe des Sollstroms nicht erreichen, bleiben oder werden die beiden Stromkreise abgeschaltet, so daß die Ladung ohne weiteres Zutun beendet wird. - Wenn der jeweilige Lade- und Entladestromkreis normalerweise geöffnet ist, werden entsprechende Mittel zum Sperren abhängig von der Größe der genannten Ist-Ströme vorgesehen.

Beim Laden von Stromspeichern (Akkus), die nach dem erfindungsgemäß weiterentwickelten Reflexladeprinzip geladen werden, insbesondere in Verbindung mit NiCd und NiMH-Akkus, ergeben sich folgende Vorteile:
- es wird eine nahezu 100 %ige Volladung und exakt sichere Abschaltung mit Voll-Ladungserkennung erreicht
- Überladung der Akkus ist ausgeschlossen
- Akkus, die ausnahmslos mit erfindungsgemäßen Ladegeräten geladen werden, erreichen eine Mindestlebensdauer von 1.500 bis 3.000 Ladezyklen, je nach Hersteller und Akku-Typ
- durch die geringe Ladedauer (ca. 10 bis 15 Minuten) ist - häufig - die Einsparung eines Ersatz-Akkus möglich
- das Verfahren erlaubt es, einen Akku mit einem Strom bis zur 4-fachen Nennkapazität und mehr zu laden
- der Memory-Effekt wird praktisch - zu annähernd 99 % - ausgeschlossen
- vom Memory-Effekt bereits befallene Akkus können nach dem erfindungsgemäßen Verfahren sogar regeneriert werden
- eine gesonderte Entleerung der jeweiligen Akkus vor dem erneuten Laden entfällt; der Ladezustand vor dem erneuten Laden ist also bei Anwendung der Erfindung bedeutungslos
- Fehlbedienungen können nicht vorkommen, da eine Trennung von Akku und Ladegerät nicht erforderlich ist
- erfindungsgemäße Ladegeräte lassen ohne Umbau die Anwendung für alle Akkugrößen zu, das gilt insbesondere auch in einem großen Bereich unterschiedlicher Nennspannungen und Ladeströme
- das Laden von Akkus bis zu 36 V Nennspannung (Ladestrom bis zu 10 Ampere) mit Stromentnahme an einer Autobatterie (z.B. Zigarettenanzünder) ist möglich, da das erfindungsgemäße System weitgehend unabhängig von der Nennspannung (Akku-Größe) einsatzfähig ist

Anhand der schematischen Darstellung von Ausführungsbeispielen werden weitere Einzelheiten der Erfindung erläutert Es zeigen:
- **Fig. 1**: eine Prinzipdarstellung einer Schaltung eines erfindungsgemäßen Ladegeräts; und
- **Fig. 2**: eine bevorzugte Ausbildung der Schaltung nach Fig. 1.

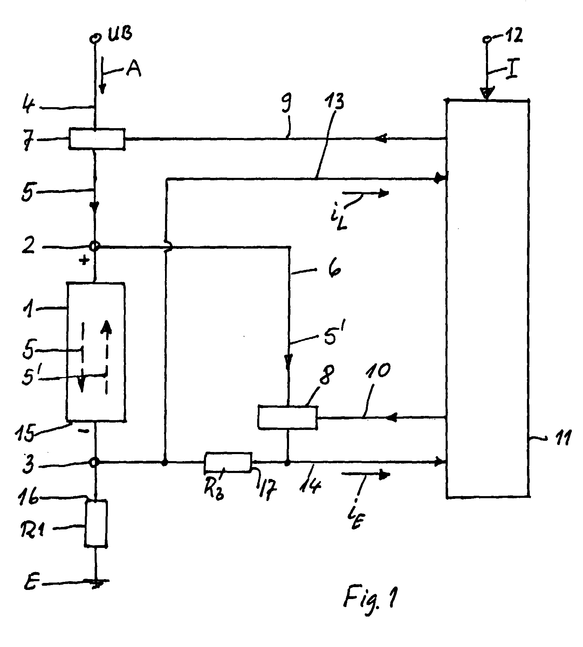

Fig. 1 zeigt wesentliche Teile einer Ladeschaltung mit einem Akkumulator (Akku) 1 mit Klemmen 2 und 3. Der Akku 1 symbolisiert einen oder mehrere, z.B. sogar 10 bis 30, Stromspeicher. Im allgemeinen ist die Klemme 2 positiv und die Klemme 3 negativ. Zum Laden des Akkus 1 ist ein teilweise dargestellter Stromkreis 4 mit Stromquelle UB für den Ladestrom vorgesehen. Der Stromkreis 4 führt in Richtung 5 über die Klemme 2, den Akku 1, die Klemme 3 und einen Ladewiderstand R1 zur Erde E. Außerdem gibt es einen Entladestromkreis 6, der die Klemmen 2 und 3 verbindet und einen Entlade-Widerstand R3 enthält. Der Entladestromkreis 6 führt ebenfalls durch den Akku 2, jedoch in umgekehrter Richtung 5 wie der Ladestromkreis 4. Der Ladewiderstand R1 ist größer als der Entlade-Widerstand R3. Die Entladestromstärke fA soll dem Betrage nach um einen vorgegebenen Reflexfaktor f größer als die Ladestromstärke A sein. Um diesen vorgegebenen Reflexfaktor f soll der Entlade-Widerstand R3 kleiner als der Ladewiderstand R1 sein.

Zum Ein- oder Ausschalten der beiden Stromkreise 4 und 6 können bevorzugt Feldeffekttransistoren 7 und 8 oder dergleichen Ventile vorgesehen werden, die über Schaltleitungen 9 bzw. 10 mit einer insgesamt mit 11 bezeichneten Steuerung verbunden werden. Die Steuerung 11 besitzt außer den Ausgängen zu den Schaltleitungen 9 und 10 im wesentlichen drei Eingänge, nämlich einen Eingang 12 für einen Strom-Sollwert I und je einen Eingang für den jeweiligen Ist-Ladestrom i_{L} sowie den jeweiligen Ist-Entladestrom i_{E}. Der Ladestrom i_{L} wird im Bereich zwischen Masseseite 15 des Akkus 1 und Akkuseite 16 des Ladewiderstands R1 abgetastet bzw. gemessen. Die Steuerung 11 soll Elemente enthalten, die den Feldeffekttransistor 7 über die Leitung 9 sperren, wenn der Ist-Ladestrom i_{L} eine bestimmte Größe überschreitet. Der Ist-Entladestrom i_{E} wird auf der von der Masse-Elektrode 15 des Ladewiderstandes R₁ abgewandten Meßseite 17 des Entlade-Widerstandes R3 erfaßt bzw. gemessen und ähnlich wie i_{L} mit dem Sollstrom 1 verglichen. Beispielsweise kann die Steuerung 11 so ausgebildet werden, daß der Sollstrom 1 den Feldeffekttransistor 8 über die Schaltleitung 10 sperrt , wenn i_{E} einen bestimmten Wert überschreitet.

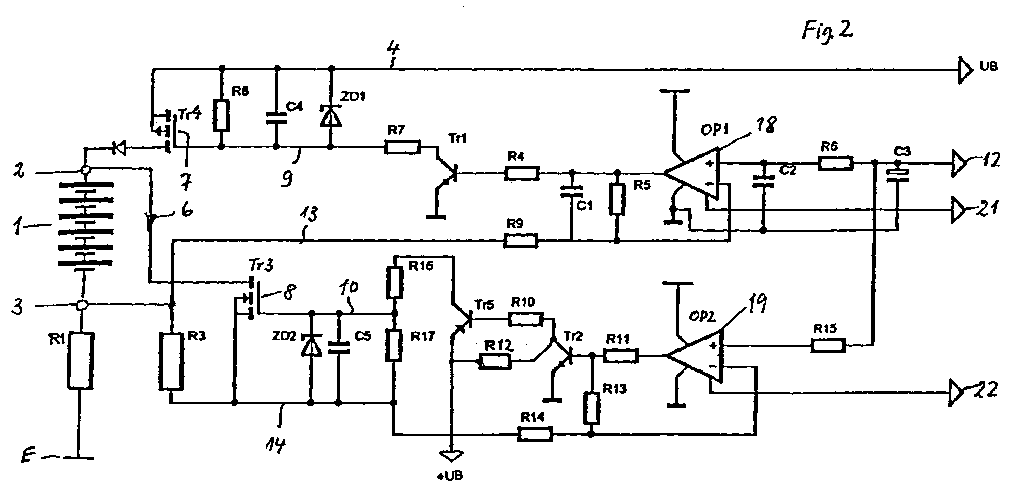

Ein Ausführungsbeispiel mit näheren Einzelheiten der Schaltung nach Fig. 1 wird in Fig. 2 dargestellt. Gleiche oder sich entsprechende Teile werden in Fig. 2 ebenso wie in Fig. 1 bezeichnet. Die meisten Einzelheiten von Fig. 2 werden unmittelbar durch die Zeichnung am besten verständlich. Die Operationsverstärker OP1 und OP2 bzw. 18 und 19 von Fig. 2 sollen im dargestellten Ausführungsbeispiel den Sollstrom 1 durchlassen und damit über die nachgeschalteten Bauelemente schließlich die Feldeffekttransistoren 7 oder 8 sperren, wenn die Ist-Ströme i_{L} bzw. i_{E} den Betrag des Sollstroms I übersteigen. Den Steuer-Eingängen 21 und 22 der Operationsverstärker 18 und 19 kann für die Ladeseite bzw. die Entladeseite ein handelsüblicher Prozessor zugeordnet werden, der geeignet ist, die beiden als Konstantstromquellen dienenden Operationsverstärker 18 und 19 mit dem Sollstrom I und den beiden Istströmen i_{L} und i_{E} zu steuern.

### Bezugszeichenliste

- 1: = Akku
- 2,3: = Klemmen
- 4: = Ladestromkreis
- 5, 5': = Stromrichtungen
- 6: = Entladestromkreis
- 7, 8: = FET
- 9,10: = Schaltleitung
- 11: = Steuerung
- 12: = Eingang I
- 13: = Eingang i_{L}
- 14: = Eingang i_{E}
- 15: = Masseseite (1)
- 16: = Akkuseite (R1)
- 17: = Meßseite (R3)
- 18, 19: = Operationsverstärker
- 21: = Eingang von 18
- 22: = Eingang von 19
- R1: = Ladewiderstand
- R3: = Entlade-Widerstand
- I: = Sollstrom
- i_{L}: = Ist-Ladestrom
- i_{E}: = Ist-Entladestrom
- E: = Erde
- f: = Reflexfaktor
- A: = Ladestromstärke

## Patentansprüche

1. Ladestation für mindestens einen Stromspeicher bzw. Akkumulator (Akku) (1), in der der Akku nach dem sogenannten Reflexladeverfahren während des Ladevorgangs zyklisch entladen wird, wobei die Entladezeit kurz gegen die Ladezeit und die Entladestromstärke dem Betrage nach um einen vorgegebenen Reflexfaktor größer als die Ladestromstärke (A) ist, **dadurch gekennzeichnet**, daß der Akku (1) mit seiner Masseseite (15) über einen seinen AkkuInnenwiderstand übersteigenden Ladewiderstand (R1) geerdet ist und daß ein Entladestromkreis (6) vorgesehen ist, welcher die Akku-Klemmen (2, 3) über einen Entlade-Widerstand (R3), der um den vorgegebenen Faktor kleiner als der Ladewiderstand (R1) ist, verbindet, wobei der Ladewiderstand (R1) außerhalb des Entladestromkreises (6) liegt.

2. Ladestation nach Anspruch 1, **dadurch gekennzeichnet**, daß zum wahlweisen Einschalten des Lade- oder Entladezyklus eine mit einem vorgegebenem Sollwertstrom (I) beaufschlagte Steuerung (11) vorgesehen ist, die Mittel zum Öffnen des Ladestromkreises (4) oder des Entladestromkreises (6) abhängig von der Größe des Ist-Entladestroms (i_{E}) oder des Ist-Ladestroms (i_{I}) im Verhältnis zur Größe des Sollstroms (I) besitzt.

3. Ladestation nach Anspruch 1 oder 2, **dadurch gekennzeichnet**, daß der Lade- und Entladestromkreis (4, 6) als Mittel zum Öffnen oder Sperren je einen Feldeffekttransistor (=FET) (7, 8) enthält.

4. Verfahren zum Laden mindestens eines Stromspeichers bzw. Akkumulators (Akkus) (1), bei dem der Akku nach dem sogenannten Reflexladeverfahren während des Ladevorgangs zyklisch entladen wird, wobei die Entladezeit kurz gegen die Ladezeit und die Entladestromstärke dem Betrag nach um einen vorgegebenen Reflexfaktor größer als die Ladestromstärke (A) ist, **dadurch gekennzeichnet**, daß der Akku (1) über einen seinen Akku-Innenwiderstand übersteigenden Ladewiderstand (R1) geerdet wird und daß das Entladen jeweils über einen in einen Entladestromkreis (6) eingeschalteten Entlade-Widerstand (R3) oberhalb der Spannung der Akku-Seite (16) des Ladewiderstandes (R1) erfolgt und daß ein Entlade-Widerstand (R3) verwendet wird, welcher um den vorgegebenen Reflexfaktor (f) kleiner als der Ladewiderstand (R1) ist.

5. Verfahren nach Anspruch 4, **dadurch gekennzeichnet**, daß der Lade- oder Entladezyklus abhängig vom Ergebnis des Vergleichs des Ist-Ladestroms (iL) oder des Ist-Entladestroms (i_{E}) mit der Größe eines vorgegebenen Sollstroms geschaltet wird.
